Europäisches Patentamt

European Patent Office

Office européen des brevets

(19)

(11) **EP 1 286 539 A1**

(12) **EUROPEAN PATENT APPLICATION**

(43) Date of publication:
26.02.2003 Bulletin 2003/09

(51) Int Cl.⁷: $H04N\ 5/232$

(21) Application number: 01307173.3

(22) Date of filing: 23.08.2001

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **BRITISH TELECOMMUNICATIONS public limited company**
**London EC1A 7AJ (GB)**

(72) Inventor: **The designation of the inventor has not yet been filed**

(74) Representative: **Lloyd, Barry George William et al**
**BT Group Legal Services,**
**Intellectual Property Department,**
**8th Floor, Holborn Centre,**
**120 Holborn**
**London EC1N 2TE (GB)**

(54) **Camera control**

(57) An image received by the camera is stored in a memory (24) and analysed (25) to obtain for each picture element of the image a score indicating the degree of dissimilarity of the element and its environment from the remainder of the image. Thee scores are further analysed (27) to identify a region of the image having the greatest such dissimilarity, and the coordinates at this point are used to direct a focus control mechanism (22) to focus the camera on that part of the image, and/or to direct an exposure control device (24) to adjust the exposure of a camera to suit the identified part of image.

Fig. 1

**Description**

This invention relates to a system for camera control and particularly, though not exclusively for automatically focusing camera lenses on the subject in a scene. The system may also be used to ensure accurate exposure of the subject in a scene and to offer guidance to the photographer on composition.

Modern cameras employ either active or passive autofocus systems. Active systems use sound waves or infrared to judge the distance of subjects from the camera and hence derive the necessary lens adjustment to obtain a sharp image. Early cameras emitted an ultra-high-frequency sound and then listened for the echo; the length of time it took the ultrasonic sound to reflect from the subject determined the focus setting.

Systems that use sound are very limited and cannot be used to shoot through glass, for example. Systems that use infrared (US Patents 4602861, 4983033, 4843416) can measure aspects (e.g. intensity or the delay) of the reflected beam to estimate the distance of the subject from the camera. Such systems are misled by a source of infrared from an open flame, or a black object that absorbs the outgoing infrared beam. As with sound the infrared beam can bounce off objects (e.g. fence, bars, glass, etc) in front of the subject thereby producing erroneous distance measures. In addition very bright subjects can make it difficult for the camera to 'see' the reflected infrared beam.

Passive autofocus determines the distance to the subject by computer analysis of the image captured by the camera lens. A common passive technique measures the sum of the differences in intensity of light arriving on adjacent pixels in a horizontal and/or vertical strip and adjusts the focus until a maximum sum is obtained. There is no limitation on the distance to the subject and focusing can take place through glass.

Both autofocusing systems either assume by default that the subject is in the centre of the image or rely upon the photographer to identify the point of focus to the camera. This means that it is quite easy to mistakenly focus on the background if the actual subject is off-centre, or if the camera is accidentally focussed on a point that misses the subject. Some systems apply special processing rules to high-lights and dark areas to produce better results. However, these rules cause many focusing failures on images to which the rules do not apply.

According to the present invention there is provided a camera comprising means for storing electronically an image received by the camera;
means for analysing the stored image to identify a region of the image different from other parts of the image; and
means for controlling operation of a camera based on the identified part of the image.

Other aspects of the invention are defined in the subclaims.

Some embodiments of the invention will now be described, by way of example, with reference to the accompanying drawings in which:

    Figure 1 is a block diagram of a camera in accordance with one embodiment of the invention;

    Figure 2 is a flowchart illustrating the operation of the camera;

    Figure 3 is a flowchart illustrating the analysis of a still picture; and

    Figure 4 represents a still picture to be processed by the method of Figure 1.

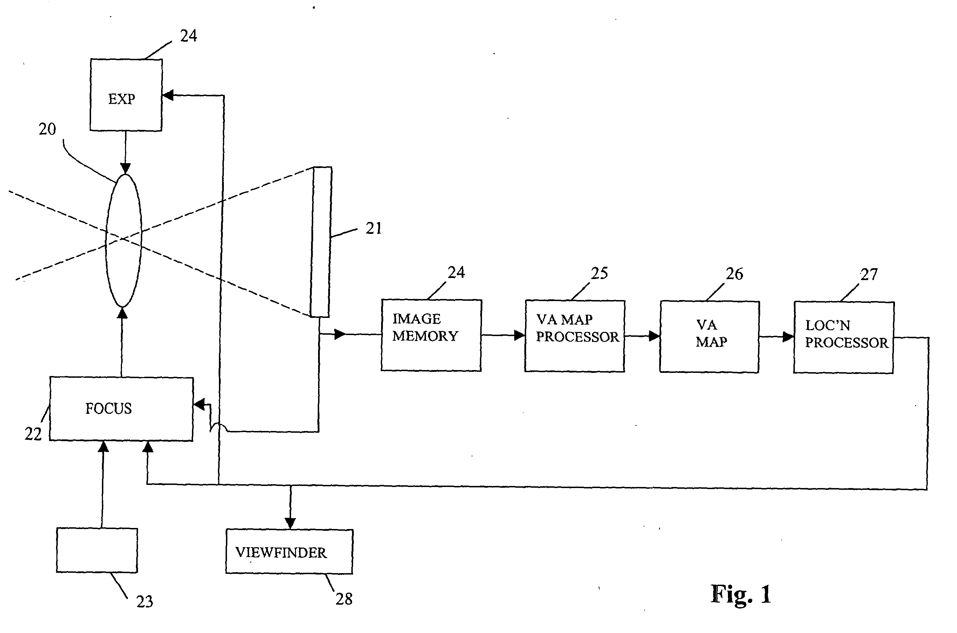

Figure 1 shows a camera having a lens 20 which focuses the image of a subject on a digital pick-up device 21. The focusing of the image is controlled by a focus device 22 which adjusts the focus on the basis of feedback from the pick-up device 21, on the basis of an input signal stipulating (for example by means of x, y coordinates) the location within the field of view of the camera upon which the focusing operation is to take place. The selection of this point can be set by means of a manual control 23. The camera also has an exposure control device 24.

As so far described, the camera is conventional. For the purpose of this description it is assumed to be a still, digital camera. However it could equally well be a digital video camera, or camcorder for recording moving pictures. Indeed it could be a camera whose primary task is to record pictures in a more traditional manner, for example upon a photographic film (still or cine) or a television camera employing a non-digital pick-up device. In the latter cases, the digital image pick-up device 21 would be additional to the components that such a camera would normally contain.

The components illustrated in Figure 1 further comprise a digital image memory 24 into which image pixel values from the pick-up device are stored, a Visual Attention Map processor 25 which computes a set of visual attention values for pixels in the image memory 24 and places them in the Visual Attention Map memory 26, and a subject location processor 27 that determines the location of the subject from data in the map 26 and communicates this location to the autofocus mechanism 22.

In another arrangement the autofocus mechanism may not directly affect the focus, but merely display the indicated subject location in the viewfinder 28 for the photographer to use in the composition of the picture. The photographer may then choose whether the focusing operation is to take place on the recommended location, or the centre of the scene, or on a manually selected point.

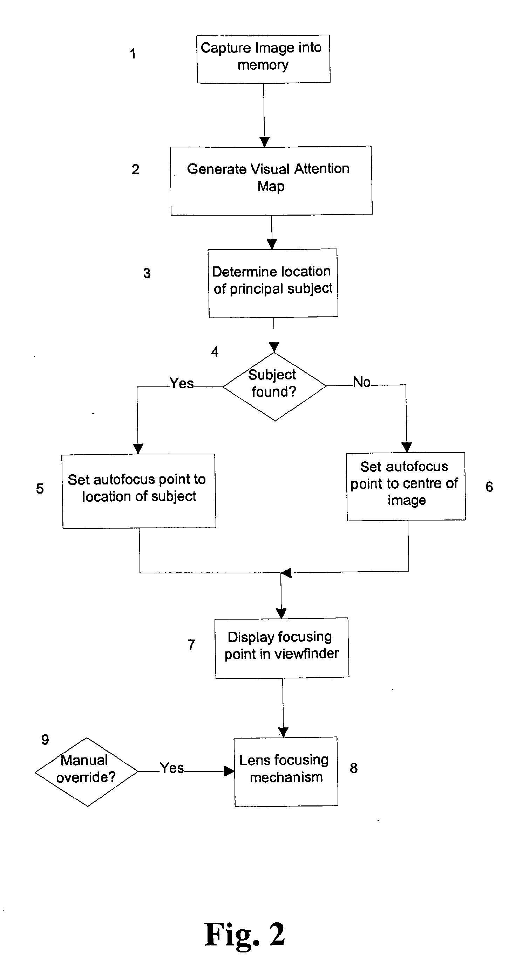

A flowchart indicating the operation of the process is shown in Figure 2. An image is captured (step 1) through the camera lens system and stored in the memory 24. In step 2 the processor 25 generates a Visual Attention Map 26 consisting of a value (typically from 1 to 100) for each pixel of the image, which a high value corresponds to a high likelihood that the corresponding pixel in the image memory 24 lies on the principal subject. The processor 27 in step 3 calculates the x, y coordinate of the subject in the captured image 24 using data in the store 26.

The operation of the Visual Attention Map processor 25 will now be described. This method is described and claimed in our co-pending international patent application no. PCT/GB01/00504.

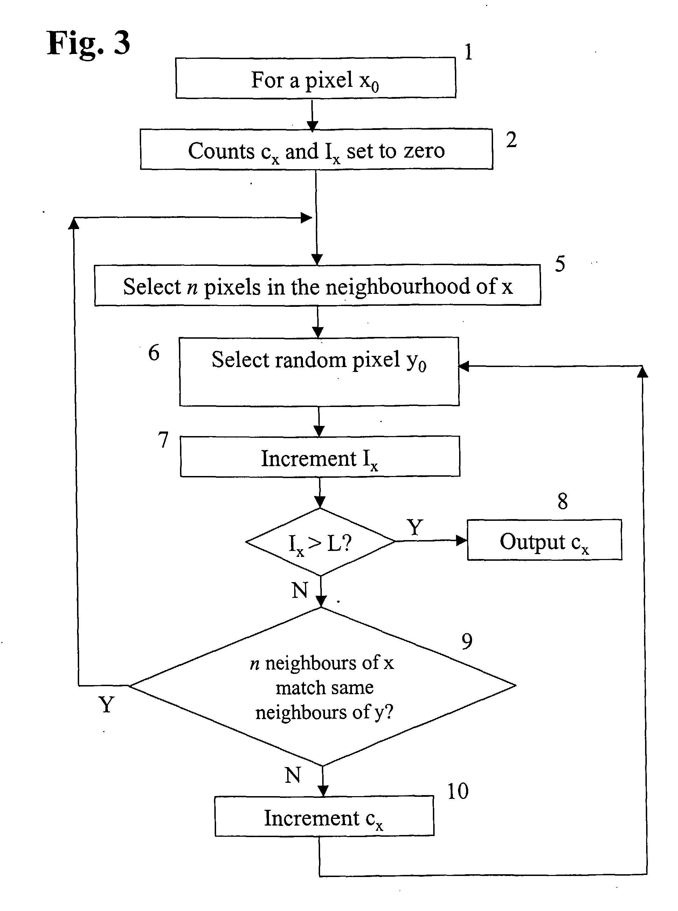

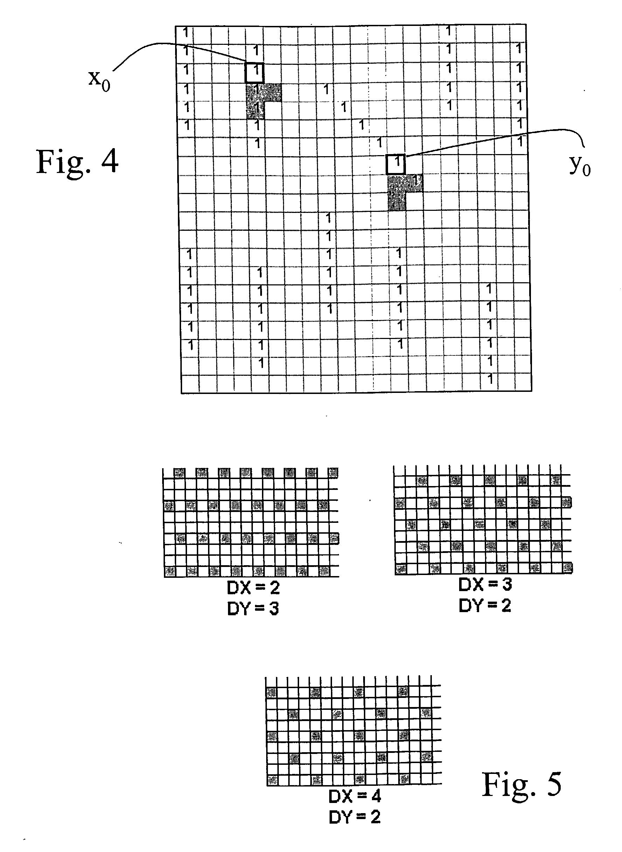

Considering now Figures 3 and 4, an image to be analysed is stored in a digital form in the image store 24, as an array A of pixels x where each pixel has colour intensities $(r_x, g_x, b_x)$ attributed to it. The procedure followed by the processor 25, implemented by a microprocessor controlled by suitable software, is as follows.

A pixel $x_o$ is then selected from the array A (step 1), and its intensity value $(r_x, g_x, b_x)$ is stored in a test pixel register (not shown).

An anomaly count $c_x$, and a count of the number of pixel comparisons $I_x$ are both set to zero (step 2).

The next step is the random selection of a number of points in the vicinity of the test pixel $x_o$. This region is defined by a distance measure $u_x$ (typically in units of pixels). Thus, n pixels $x_j$ are selected such that
$$dist(x_j - x_{j-1}) < u_x$$
where j = 1, ..., n and $x_o$ = x.

The distance used may be any of those conventionally used, such as the Euclidean distance or the "city block distance between the positions within the image of the two pixels. If the horizontal and vertical coordinates of $x_j$ are $p(x_j)$ and $q(x_j)$ then the Euclidean distance is

$$\sqrt{\left[p(x_j) - p(x_{j-1})\right]^2 + \left[q(x_j) - q(x_{j-1})\right]^2}$$

whilst the city block distance is

$$\left|p(x_j) - p(x_{j-1})\right| + \left|q(x_j) - q(x_{j-1})\right|$$

Typically n = 3 , and $u_x$ = 1. An example of such a group is shown in Figure 4, in which the test pixel, (shown boxed) has pixels (shown shaded) associated with it. For $u_x$ = 1, the pixels are contiguous, but, in general the pixels may not necessarily neighbour one another or be contiguous in any sense. The definition of the neighbour pixels is stored in a neighbour group definition store.

A pixel $y_o$ is now selected randomly (step 6) from the array A to be the current comparison pixel (also shown boxed in Figure 3) whose identity is stored in a comparison pixel register.

The value of $I_x$ stored in the comparison counter is incremented (step 7): if a limit L is exceeded, no further comparisons for the test pixel x are made (step 8). The contents of the neighbour group definition register are then used by the calculation processor 25 to define a set of pixels forming a test group $x_j$ and a set of pixels forming a comparison group $y_j$, each pixel $y_j$ of the comparison group having the same positional relationship to the comparison pixel y as the corresponding pixel $x_j$ in the test group has to the test pixel x (step 9).

The processor 25 then compares each of the pixels $x_j$ (shaded in Figure 3) with the corresponding pixel $y_j$ (also shown shaded), using a set of threshold values $\Delta r_x$, $\Delta g_x$ and $\Delta b_x$.

A pixel y is identified as being similar to a test pixel x if :

$$\left|r_y - r_x\right| < \Delta r_x$$

and

$$\left|g_y - g_x\right| < \Delta g_x$$

and

$$\left|b_y - b_x\right| < \Delta b_x \ .$$

- where $\Delta r_x$, $\Delta g_x$ and $\Delta b_x$ are threshold values which are, in this embodiment, fixed.

If all the pixels $x_j$ in the test group are similar to their corresponding pixels $y_j$ in the comparison group, the process is repeated by selecting a new set of neighbouring pixels (step 5) and a new comparison pixel $y_o$ (step 6). If (as illustrated in Figure 4) one or more pixels $x_j$ in the test group are not similar to the corresponding pixel $y_j$ in the comparison group, in accordance with the similarity definition above, the count $c_x$ is incremented (step 10). Another comparison pixel $y_o$ is randomly selected and stored in the comparison pixel register (return to step 6) and the neighbour group definition retrieved from the neighbour group definition store is used to supply a new comparison neighbour group to the comparison group register 449 for comparison with the test group stored in the test group register. A set of pixels $x_j$ is retained in the test group register so long as it continues to fail to match other parts of the image. Such a set represents a distinguishing feature of the locality of x - the more failures to match that occur, the more distinctive it is. The more comparison pixels y that the test pixel x fails to provide matches for, the higher the anomaly value $c_x$ stored in the anomaly counter becomes. Conversely, the more matches that the test pixel x generates, the lower the value of the anomaly value when the threshold L is reached by the comparison counter. As L comparisons are made each time, the anomaly value $c_x$ which results from the process may be considered to be a measure of the proportion of randomly selected pixels which would fail to provide a match for the test pixel x.

When the iteration value $l_x$ stored in the comparison counter reaches the threshold value L, the iterative process stops (step 8) and the current anomaly value $c_x$ is output as the anomaly value or score for the pixel x. This final anomaly value $c_x$ is the measure of visual attention for the test pixel x, and is the number of attempts (from a total of L attempts) for which the inherent characteristics (i.e. the colours) of randomly selected neighbours of pixel x failed to match the corresponding neighbours of randomly selected pixels y. A high value for $c_x$ indicates a high degree of mismatch for pixel x with the rest of the image and consequently that pixel x is part of an object worthy of visual attention.

In this embodiment, the process is repeated, from step 1, for every pixel in the image as the test pixel, so that a value $c_x$ is obtained for every pixel x in the array A. Typically, L may be set to be 100.

As described above, comparisons are performed for the neighbouring pixels $x_j, y_i$, j=i,...n; however, if desired, the original or root pixels may also be included, the comparisons being performed for j = 0, ...,n.

Some modifications will now be discussed:

1. The thresholds used in an embodiment of the invention for colour images will depend upon the colour space in which the comparison between pixels is carried out. In another embodiment of the invention operating on colour images in the hue, saturation, value (HSV) space $\Delta h_x$, $\Delta s_x$, $\Delta v_x$ colour difference thresholds can be used. Here, pixel values consist of $h_x$, $s_x$ and $v_x$ and the calculation is carried out in the HSV colour space pixel y is identified as being similar to test pixel x is:

$$|v_y - v_x| < \Delta v_x, \text{ and } |\dot{s}_y - s_x| < \Delta s_x, \text{ and } |h_y - h_x| < \Delta h_x$$

where $\Delta h_x = Z*(2- v_x)*(2- s_x)$. Z is stored in an empirical table of thresholds dependent upon $h_x$. This results in a larger value of $\Delta h_x$ for low values of $v_x$ and $s_x$.

Alternatively, for a grey-scale image, single luminance values $t_x$ and a luminance difference threshold $t_x$ would be used.

2. The selection of a group of n pixels $x_j$ in the neighbourhood of the test pixel x from the image store 24 may be made such that:

$$\text{dist}(x_j, x_{(j-1)}) < u_x$$

where j = 1, ..., n and $x_0 = x$

If desired, $u_x$ may vary with j: this allows pixels to be selected from a wide region whilst ensuring that some of the selected pixels are close to the test pixel $x_o$. The value of dist $(x_j, x_{(j-1)})$ may be defined in any suitable units, such as pixel size. The definition of the neighbour group is stored in the neighbour group definition store 444.

Alternatively, a group of n pixels $x_j$ in the neighbourhood of the test pixel x can be selected from the image store 440 , the selection being such that:

$$\text{dist}(x_0, x_{(j)}) < u_x$$

where j = 1, ..., n and $x_o = x$

As in the case of the still image, the distance function used can be any of those conventionally employed.

3. In the first embodiment of the invention the colour difference thresholds were predetermined and were not changed with each selection of a new neighbour group definition strategy. Alternatively the search strategy selected by the CPU 42 and provided to a neighbour group definition store may comprise a set of colour difference thresholds $(\Delta r_x, \Delta g_x, \Delta b_x)$, (or in the case of grey level images a single threshold $\Delta t_i$), as well as the neighbour group definition. Previously generated search strategies, comprising neighbour pixel groups definitions $x_j$ and associated colour difference thresholds $(\Delta r_x, \Delta g_x, \Delta b_x)$ stored in the search strategy store as a result of achieving a high anomaly score on previous test pixels may be preferentially selected by the CPU 42, randomly generated candidates only being supplied by the processor to the current neighbour group definition store when the supply of such stored criteria is exhausted. This mechanism reduces the number of unsuccessful iterations of the process and enhances the anomaly values in the vicinity of the object of attention by reusing features that highlight mismatches in the current image.

Similarly, test groups that have achieved high anomaly scores on previous tests may be retrieved from the search strategy store.

As the process continues, successful search strategies (that is, combinations of values of $\Delta r_x$, $\Delta g_x$, $\Delta b_x$ and $u_x$, and neighbour groups, which generate high values of $c_x$,) will become apparent. If a group of n pixels $x_j$ and the corresponding colour difference thresholds $(\Delta r_x, \Delta g_x, \Delta b_x)$ cause the anomaly value of $c_x$ to reach a threshold M before a match is found, the search strategy stored in the neighbour group definition store is copied to the search strategy store for future use, if it is not already stored. The strategies that have generated high anomaly values are thus available in the search strategy store for use in selecting suitable values in further cycles. Once a match is found, the process starts again with a new search strategy (colour difference threshold and neighbour set) stored in the neighbour group definition store, either by retrieval from the search strategy store or generated randomly.

Initially the search strategies will be generated at random by the processor, — if the strategy is not suitable for identifying differences the cycle will be rejected and a new strategy selected. Successful strategies can be stored in the search strategy store for subsequent re-use.

5. Several test pixels may be processed in parallel, but for purposes of illustration only one will be considered here.

6. In the above examples, an anomaly value $c_x$ is formed for every pixel of the array. However, in order to increase the speed of operation, the values $c_x$ may be formed only for a subset of the pixels. Once attention values have been generated for the pixels in the subset, then further pixels in the vicinity of those having a high measure $c_x$ may then be processed. For example one might choose the top 20% of the pixels (in terms of measures $c_x$) and process the pixels within a small defined area of each.

In the illustrated embodiment the pixels form a regular rectilinear tessellation, but the process is suitable for other arrangements of pixels. If the array is irregular, the positional relationship of each pixel $y_j$ to the comparison pixel y may not be exactly the same the positional relationship of each pixel $x_j$ to the test pixel x, but each one will be the closest possible to the exactly corresponding position.

Turning now to the detailed operation of the subject location processor 27, one method of proceeding is as follows. For example, the values in the store 26 are first set to zero if they are less than 90% of the highest value. If either the width or height of the remaining non-zero array is greater than half the width or height, respectively, of the image stored in 26, the subject location has not been found (step 4) and the autofocus point is set to the centre of the image (step 6). If this is not the case, the centre of gravity of the array is computed. If this co-ordinate corresponds to a non-zero value in the Visual Attention Map 43, it is set as the x,y co-ordinate of the autofocus point (step 5). Otherwise the x,y co-ordinate of the closest non-zero value in the memory 26 is taken as the autofocus point (step 5). The location of the autofocus point is then displayed in the viewfinder (Step 7) and the autofocus mechanism set to operate at the selected autofocus point (step 8).

At any time during this process a manual override (step 9) is available which forces the autofocus mechanism to operate on a point in the image determined by the user. It is also the case that as the camera is moved, a series of images is being captured into image memory 24 and new autofocus points are continuously being generated and displayed.

The system described here is passive and first identifies the location of the principal subject in a visual scene and directs a computer analysis in the neighbourhood of that location to determine the distance of the subject from the camera. The subject is located using an algorithm that highlights anomalous parts of the image that bear little similarity with other parts of the image. In the process a Visual attention Map is produced that associates a score. The system is not affected by lighting conditions providing sufficient light enters the camera from the subject. Neither is the system affected by camera movement because the method of subject identification is independent of the position of the subject within the scene. The invention also provides the benefit of focussing upon small or narrow subjects that are at different distances from the camera to the background. For example, this is the case for an image of a small flower against a distant background, or a distant object viewed through a small hole in a wall that is close to the camera. The autofocus mechanism is also applicable to video cameras where each frame is analysed in a similar fashion and the camera lens is adjusted according as the identified subject moves closer or further away from the camera.

The method may also be applied to automatic exposure control in addition to, or instead of, focus control. It is common for most cameras to rely upon a centre-weighted exposure metering system which provides an average exposure value for the whole picture, but based principally upon the content at the centre of the scene. However, if the real subject is off-centre, or if the background still has an undue effect on the exposure value (e.g. seagull in a bright sky), results can be poor. As with autofocusing, this invention enables an exposure value to be determined only from light reflected from the surface of the subject in a scene thereby ensuring that the subject is represented faithfully in the final photograph. Thus the coordinates from the subject location processor 27 are fed to the exposure control unit 24 in order to cause the exposure control unit (which otherwise operates in conventional manner) to take its exposure readings from the identified part of the image.

In a more advanced version of the invention for a digital camera the exposure may be varied across the image according to the locations of the principal subjects in the scene. This would mean that the photographer would not only have the guarantee of correct exposure for the subject, but he/she would also have the additional facility to correct the exposure for the background. In the case of a subject in shade against a sunny background the exposure for the background would be treated independently of the subject and would not be overexposed. In a similar fashion the shaded background to a subject in bright sunlight would not be underexposed.

In another arrangement for a digital camera, the autoexposure mechanism may not directly affect the exposure used to take the photograph, but instead cause the potential image to be displayed in the viewfinder for the photographer to consider during composition. The effects of variable exposure if applicable would also be displayed.

The method described in this invention may also be applied to the autoexposure process for image scanners. Exposure estimation is normally based upon a prescan of the entire image from which an average exposure level is calculated. This exposure level takes no account of the subject content and often attaches too much weight to the background (e.g. sky) in achieving a full tonal range. This invention attaches a greater weight to the subject during the calculation of the exposure and thereby produces a better representation of the subject in the scanned image.

It is of further benefit that the information gleaned to identify the subject in a scene may also be used to achieve very high storage compression for the image without reducing perceptual quality. Moreover this information will also be available to automatically crop the image to remove areas of background, either within the camera (to reduce storage demands still further) or subsequently in an image editing software package.

**Claims**

1. A camera comprising means for storing electronically an image received by the camera;
   means for analysing the stored image to identify a region of the image different from other parts of the image; and
   means for controlling operation of a camera based on the identified part of the image.

2. A camera according to Claim 1, in which the analysis means comprises processing means arranged in operation to:

   select from the stored image a group of test picture elements comprising at least two elements;
   select a group of comparison picture elements comprising at least two elements, wherein the comparison group has the same number of elements as the test group and wherein the elements of the comparison group have relative to one another the same positions in the image as have the elements of the test group;
   comparing the value of each element of the test group with the value of the correspondingly positioned element of the comparison group in accordance with a predetermined match criterion to produce a decision that the test group matches or does not match the comparison group;
   selecting further said comparison groups and comparing them with the test group;
   generating a distinctiveness measure as a function of the number of comparisons for which the comparison indicates a mismatch.

3. A camera according to Claim 1 or 2 in which the control means is operable to adjust the focus of the camera such that the identified part of the image shall be in focus.

4. A camera according to any one of the preceding claims in which the control means is operable to adjust the camera exposure on the basis of the light output of the identified part of the image.

5. A camera according to any one of the preceding claims including means operable to display in the viewfinder of the camera an indication as to the position of the identified location within the image.

6. A camera according to Claim 5 in which the exposure control means is operable to apply different exposures to different parts of the image.

Fig. 1

1    Capture Image into memory

2    Generate Visual Attention Map

3    Determine location of principal subject

4    Subject found?

Yes

No

5    Set autofocus point to location of subject

6    Set autofocus point to centre of image

7    Display focusing point in viewfinder

9    Manual override?

Yes

8    Lens focusing mechanism

# Fig. 2

# Fig. 3

```
                    ┌──────────────────────────────┐  1
                    │       For a pixel x₀          │
                    └──────────────────────────────┘
                                   │
                                   ▼
              ┌──────────────────────────────────────┐  2
              │   Counts c_x and I_x set to zero      │
              └──────────────────────────────────────┘
```

For a pixel $x_0$   (1)

Counts $c_x$ and $I_x$ set to zero   (2)

Select $n$ pixels in the neighbourhood of x   (5)

Select random pixel $y_0$   (6)

Increment $I_x$   (7)

$I_x > L$?

Y → Output $c_x$   (8)

N

$n$ neighbours of x match same neighbours of y?   (9)

Y

N

Increment $c_x$   (10)

Fig. 4

DX = 2
DY = 3

DX = 3
DY = 2

DX = 4
DY = 2

Fig. 5

| European Patent Office | EUROPEAN SEARCH REPORT | Application Number EP 01 30 7173 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 00 33569 A (IRISCAN INC) 8 June 2000 (2000-06-08) | 1,3,5 | H04N5/232 |
| Y | * page 7, line 19 - line 28 * * page 16, line 18 - page 17 * | 2,4,6 | |
| Y | EP 1 126 411 A (BRITISH TELECOMM) 22 August 2001 (2001-08-22) * page 3, line 56 - page 6, line 49 * | 2 | |
| Y | US 5 978 027 A (TAKEDA NOBUHIRO) 2 November 1999 (1999-11-02) * column 3, line 44 - column 8, line 8 * | 4 | |
| Y | KOIZUMI T ET AL: "A NEW OPTICAL DETECTOR FOR A HIGH-SPEED AF CONTROL" IEEE TRANSACTIONS ON CONSUMER ELECTRONICS, IEEE INC. NEW YORK, US, vol. 42, no. 4, 1 November 1996 (1996-11-01), pages 1055-1061, XP000688726 ISSN: 0098-3063 * page 1055, column 2 - page 1056, column 2, line 31 * | 6 | TECHNICAL FIELDS SEARCHED (Int.Cl.7) H04N |
| A | US 2001/013895 A1 (AIZAWA KIYOHARU ET AL) 16 August 2001 (2001-08-16) * paragraph [0116] * | 2 | |

The present search report has been drawn up for all claims

| Place of search | Date of completion of the search | Examiner |
|---|---|---|
| BERLIN | 30 January 2002 | Materne, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 01 30 7173

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2002

| Patent document cited in search report | | Publication date | Patent family member(s) | | Publication date |
|---|---|---|---|---|---|
| WO 0033569 | A | 08-06-2000 | AU<br>EP<br>WO | 1745000 A<br>1171996 A1<br>0033569 A1 | 19-06-2000<br>16-01-2002<br>08-06-2000 |
| EP 1126411 | A | 22-08-2001 | EP<br>AU<br>WO | 1126411 A1<br>3202901 A<br>0161648 A2 | 22-08-2001<br>27-08-2001<br>23-08-2001 |
| US 5978027 | A | 02-11-1999 | JP<br>JP | 3106006 B2<br>6014236 A | 06-11-2000<br>21-01-1994 |
| US 2001013895 | A1 | 16-08-2001 | JP | 2001223874 A | 17-08-2001 |

EPO FORM P0459

For more details about this annex : see Official Journal of the European Patent Office, No. 12/82